# EUROPEAN PATENT APPLICATION

(11) **EP 3 733 282 A1**
(43) Date of publication of application: **04.11.2020**
(21) Application number: 18896734.3
(22) Date of filing: 28.12.2018
(51) Int. Cl.: B01J 20/32, B01J 20/28, B01J 20/18, B01D 53/04

(54) **HYDROCARBON ADSORBENT**

(30) Priority: 29.12.2017 KR 20170183959; 24.12.2018 WO PCT/KR2018/016590
(71) Applicant: HYUNDAI MOTOR COMPANY, Seoul 06797 (KR); Korea University Research and Business Foundation, Seoul 02841 (KR); Kia Motors Corporation, Seoul 06797 (KR)
(72) Inventor: KANG, Chun Yong, Yongin-si, Gyeonggi-do 17084 (KR); KIM, Chang Hwan, Seongnam-si Gyeonggi-do 13526 (KR); CHOI, Jungkyu, Seoul 02874 (KR); JANG, Eun-Hee, Seoul 02857 (KR); KIM, Jin Seong, Seoul 02856 (KR); CHOI, La Young, Seoul 02577 (KR)
(74) Representative: Viering, Jentschura & Partner mbB Patent- und Rechtsanwälte
(86) International application number: PCT/KR2018/016905
(87) International publication number: WO 2019/132611

(57) **Abstract**

A hydrocarbon adsorbent, according to one embodiment of the present invention, comprises a copper-containing ZSM-5 zeolite, wherein a Si/Al molar ratio of the ZSM-5 zeolite may be 11.5 to 40, and the amount of the copper included is 1 wt% to 10 wt%.

## Description

### TECHNICAL FIELD

### Cross-reference to related application(s)

This application claims priority to and the benefit of Korean Patent Application No. 10-2017-0183959 filed in the Korean Intellectual Property Office on December 29, 2017, and International Patent Application No. PCT/KR2018/016590 filed in the World Intellectual Property Organization on December 24, 2018, the entire contents of which are incorporated herein by reference.

The present invention relates to a hydrocarbon adsorbent with improved hydrocarbon adsorption capacity.

### BACKGROUND

As interest in air pollution increases, regulations for vehicle exhaust gasses such as CO, NOₓ, HC (hydrocarbons), and PM (particulate matter) in places such as the United States and Europe are being strengthened. Among them, the HC is mostly oxidized by three-way catalysts (TWCs), and the three-way catalysts are activated at a temperature of about 200 to 300 °C or higher, and thus, in a cold-start section in which the three-way catalysts are not activated, HC corresponding to 50 to 80 % of a total HC emission is emitted. In order to reduce the HC emission, studies on a hydrocarbon adsorbent (HC trap) have been conducted. The hydrocarbon adsorbent is a device that adsorbs HC emitted in the cold-start section and desorbs the HC when the three-way catalyst becomes activated at a temperature of 200 to 300 °C.

As a hydrocarbon adsorbent, zeolite having high physical and chemical stability has been extensively studied. Performance of the hydrocarbon adsorbent is tested by measuring adsorption/desorption of propene and toluene, which are typical HC emission materials. Studies on the performance of the hydrocarbon adsorbent according to a zeolite structure, a Si/Al ratio, and whether or not metal impregnation is performed, have been conducted.

### SUMMARY OF THE INVENTION

### Technical Problem

The present invention has been made in an effort to provide a hydrocarbon adsorbent with improved hydrocarbon adsorption capacity.

### Technical Solution

In order to solve the problem, a hydrocarbon adsorbent according to an exemplary embodiment of the present includes a ZSM-5 zeolite containing copper, and an Si/Al molar ratio of the ZSM-5 zeolite may be 11.5 to 40, and a content of the copper may be 1 wt% to 10 wt% based on the total weight of the ZSM-5 zeolite.

All the wt % of the content of the copper herein are based on the total weight of the ZSM-5 zeolite.

A content of the copper may be 3 wt% to 7 wt% based on the total weight of the ZSM-5 zeolite.

When the Si/Al molar ratio is 11.5 to 40 and the content of the copper is 3 wt% to 10 wt%, efficiency of the hydrocarbon adsorbent may be 55 % or greater.

When the Si/Al molar ratio is 25 to 40 and the content of the copper is 5 wt% to 10 wt% based on the total weight of the ZSM-5 zeolite, efficiency of the hydrocarbon adsorbent may be 60 % or greater.

When the Si/Al molar ratio is 15 to 25 and the content of the copper is 3 wt% to 5 wt% based on the total weight of the ZSM-5 zeolite, efficiency of the hydrocarbon adsorbent may be 70 % or greater.

The hydrocarbon may include a hydrocarbon having 5 or more carbon atoms.

A hydrocarbon adsorbent according another exemplary embodiment includes a beta zeolite containing copper, a Si/Al molar ratio of the beta zeolite may be 12.5 to 19, and a content of the copper may be 1 wt% to 10 wt% based on the total weight of the beta zeolite.

A content of the copper may be 3 wt% to 10 wt% based on the total weight of the beta zeolite.

A hydrocarbon eliminating system according to another exemplary embodiment of the present invention includes: trapping hydrocarbon by using ZSM-5 zeolite or beta zeolite containing copper at a temperature of 150 °C or less; desorbing the trapped hydrocarbon at a temperature of 150 °C or greater; and oxidizing the desorbed hydrocarbon. A Si/Al molar ratio of the ZSM-5 zeolite may be 11.5 to 40 and a content of the copper may be 1 wt% to 10 wt% based on the total weight of the ZSM-5 zeolite or the beta zeolite, and a Si/Al molar ratio of the beta zeolite may be 12.5 to 19 and a content of the copper may be 1 wt% to 10 wt% based on the total weight of the ZSM-5 zeolite or the beta zeolite.

### Advantageous Effects

As described above, the present invention provides a hydrocarbon adsorbent with improved hydrocarbon adsorption capacity.

### BRIEF DESCRIPTION OF THE DRAWINGS

FIG. 1 illustrates a configuration of purifying exhaust gas of a gasoline vehicle with a three-way catalyst.
FIG. 2 illustrates a configuration in which a hydrocarbon adsorbent adsorbs and desorbs hydrocarbon.
FIG. 3 illustrates a hydrocarbon eliminating system according to an exemplary embodiment of the present invention.
FIG. 4 illustrates a manufacturing process according to Example 1.
FIG. 5 illustrates an image of a sample manufactured in Example 1.
FIG. 6 illustrates a process condition of pre-treatment, adsorption, and desorption in Evaluation Example 1.
FIG. 7 illustrates a process condition and a reaction flowchart of an adsorption/desorption evaluation test in Evaluation Example 1.
FIG. 8 illustrates a result of measuring adsorption performance of C₃H₆ in Evaluation Example 2.
FIG. 9 illustrates a result of measuring adsorption performance of C₇H₈ in Evaluation Example 2.
FIG. 10 illustrates a result of measuring adsorption performance of C₃H₆ in Evaluation Example 3.
FIG. 11 illustrates a result of measuring adsorption performance of C₇H₈ in Evaluation Example 4.
FIG. 12 and FIG. 13 illustrate a result of measuring adsorption and purification performance of a sample manufactured in Example 1.
FIG. 14 illustrates a result of measuring adsorption performance in Evaluation Example 5.

### DETAILED DESCRIPTION

The present invention will be described more fully hereinafter with reference to the accompanying drawings, in which an exemplary embodiment of the invention is shown. As those skilled in the art would realize, the described embodiment may be modified in various different ways, all without departing from the spirit or scope of the present invention.

A hydrocarbon adsorbent according to an exemplary embodiment of the present invention will now be described in detail with reference to the drawings.

A hydrocarbon adsorbent according to an exemplary embodiment of the present invention includes a ZSM-5 zeolite containing copper, a Si/Al molar ratio of the ZSM-5 zeolite is 11.5 to 40, and a content of the copper is 1 wt% to 10 wt% based on the total weight of the ZSM-5 zeolite. All the wt % of the content of the copper herein are based on the total weight of the ZSM-5 zeolite.

Depending on the molar ratio and the content of the supported copper, it is possible to provide a hydrocarbon adsorbent with significantly improved hydrocarbon adsorption capacity.

That is, according to the present invention, adsorption performance, especially adsorption performance at a high temperature, may be improved by controlling the Si/Al ratio and the content of the supported Cu of the zeolite, and it is possible to rapidly deoxidize and simultaneously desorb hydrocarbon through a combination of a transition metal oxide and a hydrocarbon trap.

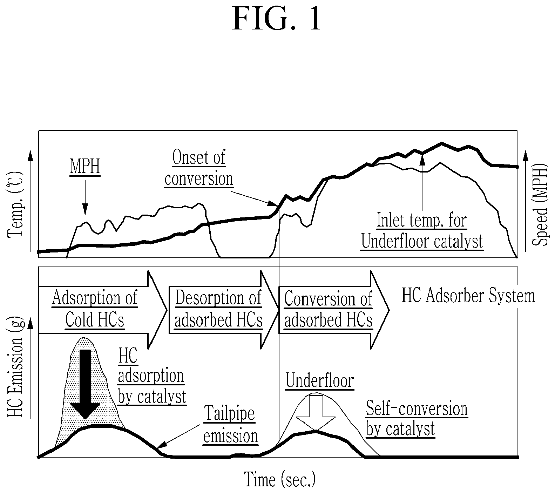

FIG. 1 illustrates a configuration of purifying exhaust gas of a gasoline vehicle with a three-way catalyst. Referring to FIG. 1, exhaust gas of a gasoline vehicle is purified by a three-way catalyst, and when a temperature of the catalyst is 400 °C or greater, the catalyst has purification performance of about 100 %. However, in a cold-start section immediately after an engine starts, the three-way catalyst may not be normally operated, thus the exhaust gas is not purified and is discharged into the atmosphere. Particularly, it is known that about 70 % of the hydrocarbons are discharged in the cold-start section.

However, in this exemplary embodiment, since the zeolite-based hydrocarbon adsorbent is introduced into the exhaust gas system, until a warm-up operation of the three-way catalyst is completed, the hydrocarbons discharged in the cold-start section are adsorbed by the hydrocarbon adsorbent, and then, when the hydrocarbon is desorbed from the hydrocarbon adsorbent at the end of the warm-up of the three-way catalyst, it may be purified through the three-way catalyst.

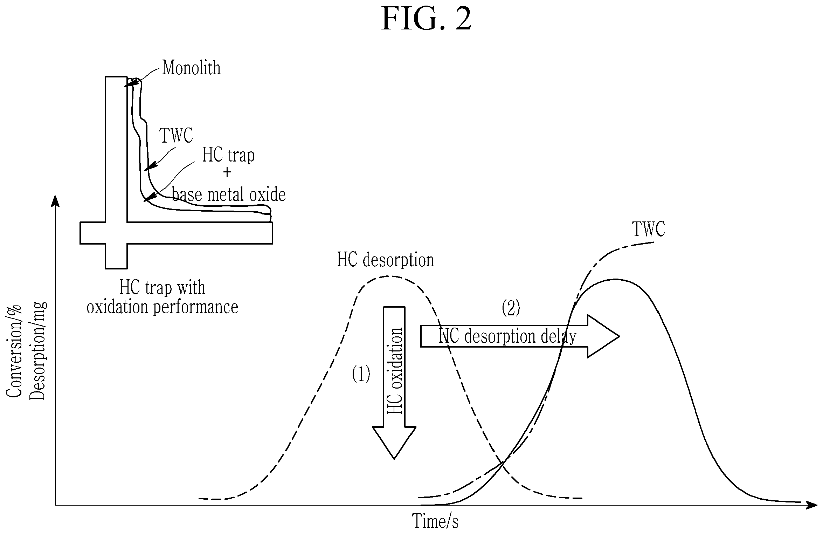

FIG. 2 illustrates a configuration in which a hydrocarbon adsorbent adsorbs and desorbs hydrocarbon. Referring to FIG. 2, since a desorption time of hydrocarbon is delayed in an adsorbent supporting copper, compared to an adsorbent not supporting copper, the hydrocarbon may be oxidized and purified simultaneously with desorption.

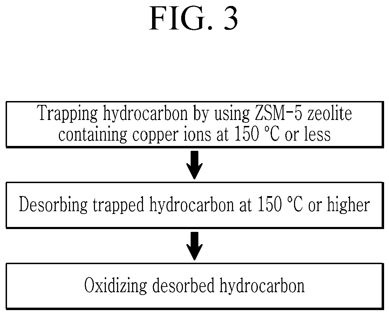

FIG. 3 illustrates a hydrocarbon eliminating system according to an exemplary embodiment of the present invention. Referring to FIG. 3, an exemplary embodiment of the present invention includes trapping hydrocarbon by using ZSM-5 zeolite containing copper ions and copper oxide at a temperature of 150 °C or less, desorbing the trapped hydrocarbon at a temperature of 150 °C or greater, and oxidizing the desorbed hydrocarbon.

In this case, a Si/Al molar ratio of the ZSM-5 zeolite may be 11.5 to 40, and a content of copper may be 1 wt% to 10 wt% based on the total weight of the ZSM-5 zeolite. Remarkable hydrocarbon trapping properties are obtained in the above range.

Hereinafter, a hydrocarbon adsorbent according to an exemplary embodiment of the present invention will be described through specific examples.

### Example 1 Cu/ZSM5 zeolite synthesis

Cu was impregnated into H-type ZSM-5 particles by using a wet impregnation method. Specifically, copper nitrate trihydrate (Cu(NO₃)₂·3H₂O, 98 %, Sigma-Aldrich) is dissolved in deionized water to prepare a solution of 0.04 M copper II nitrate (Cu(NO₃)₂). The H-type ZSM-5 particles were added to the copper nitrate solution so that 5 wt% of Cu based on the total weight of the ZSM-5 zeolite was finally impregnated. Then, the mixture was placed in a rotary evaporator, and after eliminating all moisture, the Cu-impregnated ZSM-5 was recovered to be dried at a temperature of 100 °C for about 6 hours or more, and it was calcined at a temperature of 550 °C for 6 hours at a heating rate of 1 °C/min under an air flow of 300 mL/min.

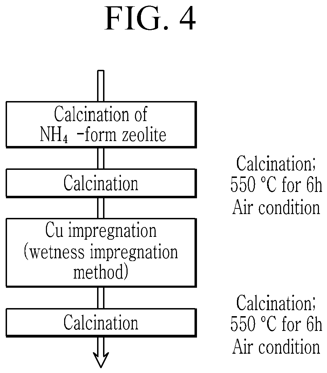

A manufacturing process according to Example 1 is shown in FIG. 4.

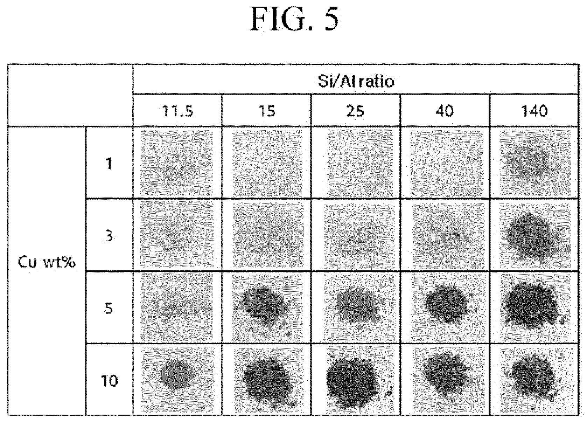

After the content of Cu and the Si/Al molar ratio were differently prepared according to the manufacturing method of Example 1, samples prepared with each content were as shown in FIG. 5.

### Evaluation Example 1: HC trap adsorption/desorption performance evaluation test in cold-start section

After 60 mg of Cu/ZSM-5 zeolite respectively prepared in Example 1 was pre-treated for 30 minutes at a temperature of 600 °C under He flow in a reaction tube, it was adsorbed for 5 minutes at a temperature of 70 °C in C₃H₆, C₇H₈, CO, H2, O₂, CO₂, H₂O, a carrier Ar/He mixed gas (Lambda 1 condition mixed gas) under C₃H₆, C₇H₈, O2, carrier gas Ar/He mixed gas flow for 5 minutes, and then the adsorption/desorption performance was evaluated while raising a temperature at a heating rate of 53 °C/min.

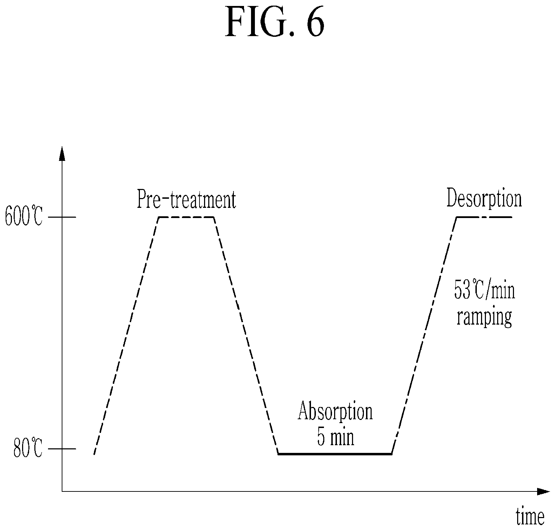

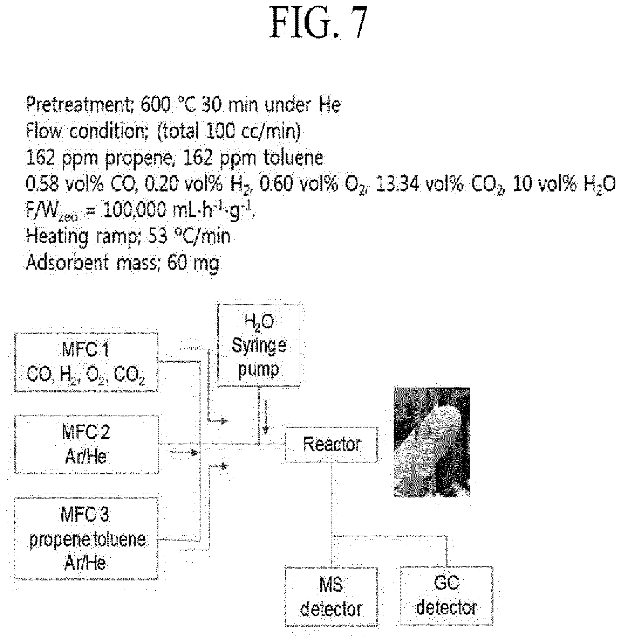

FIG. 6 illustrates process conditions of pre-treatment, adsorption, and desorption. FIG. 7 illustrates process conditions and a reaction flowchart of an adsorption/desorption evaluation test.

### Evaluation Example 2: Adsorption performance evaluation according to carbon atoms of hydrocarbon

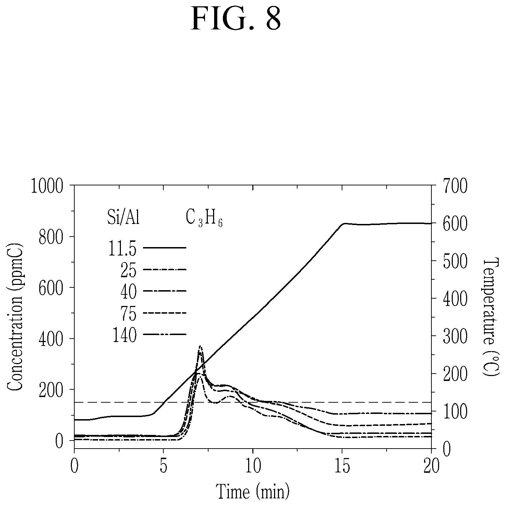

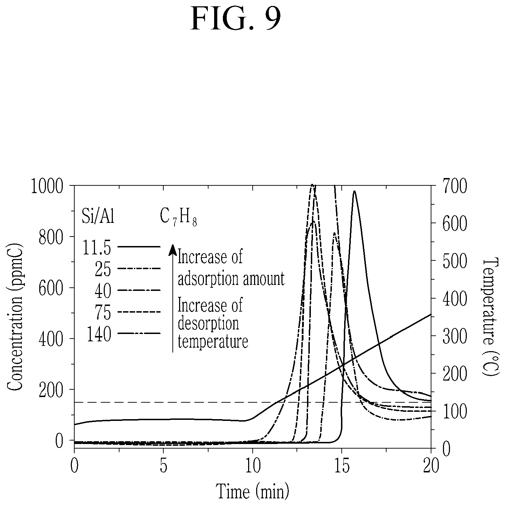

Adsorption performance for C₃H₆ and adsorption performance for C₇H₈ were measured in the same manner as in Evaluation Example 1 for ZSM-5 zeolites having different Si/Al contents shown in FIG. 8 and FIG. 9.

As a result, it was confirmed that the Si/Al ratio of ZSM-5 affects the hydrocarbon adsorption performance. Particularly, it was confirmed that an improvement effect was remarkable in hydrocarbon (C₇H₈) having large carbon atoms. According to the results of Evaluation Example 2, the smaller the Si/Al ratio, the better the hydrocarbon adsorption amount and the high temperature adsorption performance, which is determined to be due to an increase in the Brønsted acid site.

### Evaluation Example 3: Adsorption and purification performance evaluation of HC trap according to supported Cu

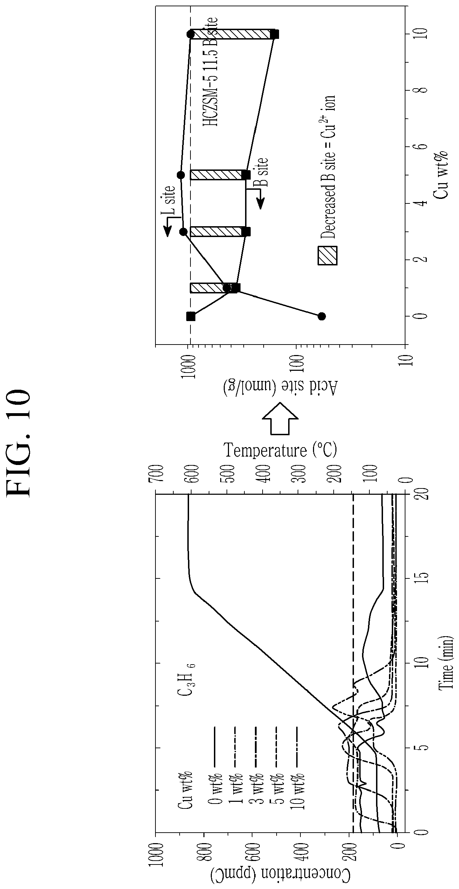

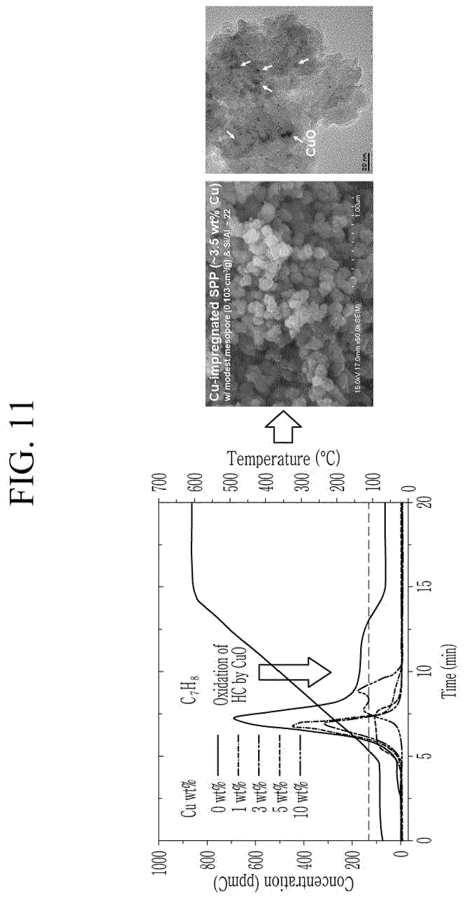

Adsorption performance for C₃H₆ and adsorption performance for C₇H₈ were measured in the same manner as in Evaluation Example 1 for ZSM-5 zeolites supporting Cu of different contents shown in FIG. 10 and FIG. 11.

As a result, it was confirmed that in the hydrocarbon adsorption performance of ZSM-5 supporting Cu, the larger the Cu supporting content, the higher the high temperature adsorption performance and the adsorption amount of C₃H₆. This is a result of ion exchange of a portion of the supported Cu, resulting in an increase in the Lewis acid site. In addition, it was confirmed that CuO, which does not participate in the ion exchange and is dispersed on an outer wall of the ZSM-5, contributed to fast hydrocarbon oxidation reaction during hydrocarbon desorption.

### Evaluation Example 4: Adsorption and purification performance of HC trap according to supported Cu and Si/Al molar ratio

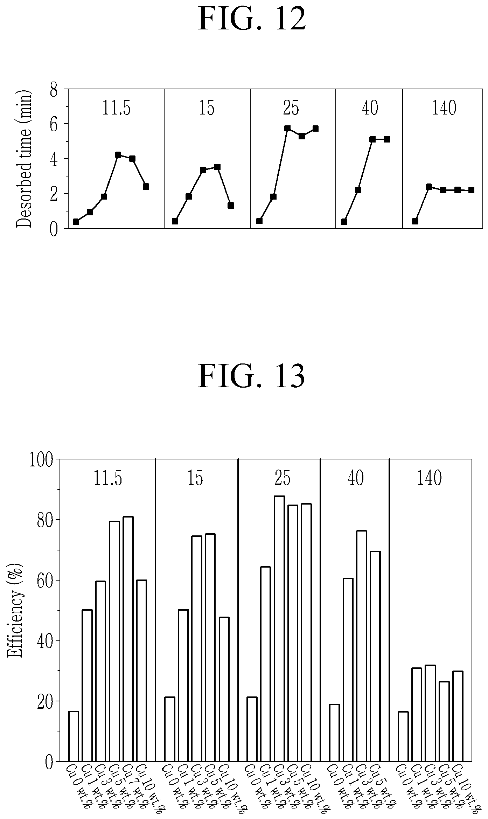

Adsorption and purification performance of each sample prepared in Example 1 and shown in FIG. 4 were measured and shown in FIG. 12 and FIG. 13.

As a result, it was confirmed that the hydrocarbon adsorption and purification performance was significantly improved by the Si/Al molar ratio and supported Cu.

It was confirmed that a preferred Si/Al molar ratio for obtaining efficiency of 50 % or greater was 11.5 to 40, and a preferred Si/Al molar ratio for obtaining efficiency of 80 % or greater was 11.5 to 25.

In the present experiment, the efficiency means an amount (%) of hydrocarbon that was not discharged compared to an amount of hydrocarbon provided up to a temperature of 300 °C. The amount of hydrocarbon was calculated as a value when converted to CH4. (For example, calculated as C₃H₆ → 3CH₄, C₇H₈ → 7CH₄)

For example, when an amount of hydrocarbon provided is 100, efficiency is 90 % in a case in which an amount of hydrocarbon discharged is 10.

In addition, it was confirmed that a preferred copper content for obtaining efficiency of 50 % or greater was 1 wt% to 10 wt% based on the total weight of the ZSM-5 zeolite, and a preferred copper content for obtaining efficiency of 80 % or greater was 1 wt% to 3 wt% based on the total weight of the ZSM-5 zeolite.

More specifically, when the Si/Al molar ratio was 11.5 to 40 and the copper content was 3 wt% to 10 wt% based on the total weight of the ZSM-5 zeolite, the hydrocarbon adsorbent suppressed the hydrocarbon emission by 55 % or greater. In addition, when the Si/Al molar ratio was 25 to 40 and the copper content was 5 wt% to 10 wt% based on the total weight of the ZSM-5 zeolite, the hydrocarbon adsorbent suppressed the hydrocarbon emission by 60 % or greater.

Similarly, when the Si/Al molar ratio was 15 to 25 and the copper content was 3 wt% to 5 wt%, the hydrocarbon adsorbent suppressed the hydrocarbon emission by 70 % or greater.

### Evaluation Example 5: Comparison with Cu/Beta zeolite

Although Evaluation Example 5 is similar to Evaluation Example 4, beta zeolite was used instead of ZSM-5 as the zeolite, the Si/Al molar ratio was varied from 12.5 to 150, and the same experiment as in Evaluation Example 4 was performed while changing the Cu content from 1 wt% to 10 wt% based on the total weight of the ZSM-5 zeolite.

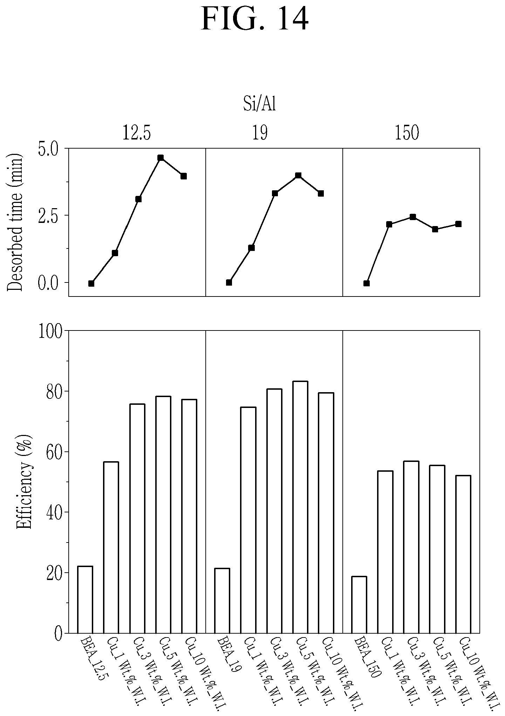

The results are shown in FIG. 14.

As a result, when the Si/Al molar ratio was 12.5 to 19 and the copper content was 1 wt% to 10 wt%, it was confirmed that remarkable efficiency was obtained.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

## Claims

1. A hydrocarbon adsorbent comprising
a ZSM-5 zeolite containing copper,
wherein a Si/Al molar ratio of the ZSM-5 zeolite is 11.5 to 40, and
a content of the copper is 1 wt% to 10 wt% based on the total weight of the ZSM-5 zeolite.

2. The hydrocarbon adsorbent of claim 1, wherein
a content of the copper is 3 wt% to 7 wt% based on the total weight of the ZSM-5 zeolite.

3. The hydrocarbon adsorbent of claim 1, wherein,
when the Si/Al molar ratio is 11.5 to 40 and
the content of copper is 3 wt% to 10 wt% based on the total weight of the ZSM-5 zeolite,
efficiency of the hydrocarbon adsorbent is 55 % or greater.

4. The hydrocarbon adsorbent of claim 1, wherein
the Si/Al molar ratio is 25 to 40 and
the content of the copper is 5 wt% to 10 wt% based on the total weight of the ZSM-5 zeolite,
efficiency of the hydrocarbon adsorbent is 60 % or greater.

5. The hydrocarbon adsorbent of claim 1, wherein,
when the Si/Al molar ratio is 15 to 25 and
the content of the copper is 3 wt% to 5 wt% based on the total weight of the ZSM-5 zeolite,
efficiency of the hydrocarbon adsorbent is 70 % or greater.

6. The hydrocarbon adsorbent of claim 1, wherein
the hydrocarbon includes a hydrocarbon having 5 or more carbon atoms.

7. A hydrocarbon adsorbent comprising
a beta zeolite containing copper,
wherein a Si/Al molar ratio of the beta zeolite is 12.5 to 19, and
a content of the copper is 1 wt% to 10 wt% based on the total weight of the beta zeolite.

8. The hydrocarbon adsorbent of claim 7, wherein
a content of the copper is 3 wt% to 10 wt% based on the total weight of the beta zeolite.

9. A hydrocarbon eliminating system comprising:
trapping hydrocarbons by using ZSM-5 zeolite or beta zeolite containing copper at a temperature of 150 °C or less;
desorbing the trapped hydrocarbon at a temperature of 150 °C or greater; and
oxidizing the desorbed hydrocarbon,
wherein an Si/Al molar ratio of the ZSM-5 zeolite is 11.5 to 40 and a content of the copper is 1 wt% to 10 wt% based on the total weight of the ZSM-5 zeolite or the beta zeolite, or
a Si/Al molar ratio of the beta zeolite is 12.5 to 19 and a content of the copper is 1 wt% to 10 wt% based on the total weight of the ZSM-5 zeolite or the beta zeolite.
